# FASCICULE DE BREVET EUROPEEN

(11) **EP 1 531 062 B1**
(45) Date de publication et mention de la délivrance du brevet: **29.08.2007**
(21) Numéro de dépôt: 05003972.6
(22) Date de dépôt: 05.07.1997
(51) Int. Cl.: B60B 1/04, B60B 21/06, B21D 28/30

(54) **Procédé de percage d'une jante à rayon, jante percée selon le procédé, insert adapté pour équiper la jante, et roue notamment de cycle**
Bohrungsverfahren für Speichenrad, Felge gebohrt nach dem Verfahren, Einsatz zur Ausrüstung der Felge und Rad insbesondere für ein Zweirad
Process for drilling a spoke wheel, rim drilled according this process, insert adapted to equip the rim, and wheel particularly for cycle

(30) Priorité: 12.07.1996 FR 9609047
(43) Date de publication de la demande: 18.05.2005
(62) Demande divisionnaire de: 97111387.3
(73) Titulaire: Salomon S.A., 74370 Metz-Tessy (FR)
(72) Inventeur: Mercat, Jean-Pierre, 74650 Chavanod (FR); Minville, Alban, 69840 Chenas (FR)

(56) Documents cités:
- EP-A- 0 130 449
- WO-A-93/09963
- WO-A-96/11075
- DE-A- 4 143 380
- US-A- 2 937 905
- PATENT ABSTRACTS OF JAPAN vol. 010, no. 253 (M-512), 29 août 1986 (1986-08-29) & JP 61 081801 A (HONDA MOTOR CO LTD), 25 avril 1986 (1986-04-25)

## Description

L'invention concerne un procédé de perçage d'une jante de roue à rayons. L'invention concerne également une jante obtenue par la mise en oeuvre du procédé. L'invention concerne également un rayon, un écrou de rayon prévus pour équiper la jante obtenue par le procédé, ainsi une roue obtenue par l'assemblage de la jante avec de tels rayons et écrous de rayons.

De façon connue, une roue, notamment de bicyclette, comprend un moyeu central relié par deux nappes de rayons à une jante circulaire. La jante est formée de deux ponts circulaires reliés par deux flancs latéraux de façon à former un caisson. Les flancs latéraux se prolongent vers l'extérieur par deux ailes, de façon à former avec le pont supérieur un canal annulaire prévu pour recevoir un pneumatique. Pour certaines jantes qui sont prévues pour recevoir un boyau, le canal est une simple rainure formée par un affaissement du pont supérieur vers l'intérieur. Les rayons sont reliés à la jante par des écrous vissés à l'extrémité des rayons. Ces écrous permettent par ailleurs de régler la tension des rayons.

Pour recevoir les écrous de rayons, de façon usuelle, les deux ponts de la jante sont percés d'orifices répartis à la circonférence de la jante. Les orifices du pont inférieur sont prévus pour servir d'assise aux têtes d'écrous. Les orifices du pont supérieur, de diamètre supérieur, sont prévus pour permettre la mise en place de l'écrou de rayon depuis l'extérieur.

Pour améliorer les conditions dans lesquelles la tête d'écrou prend appui contre la jante, et la répartition dans la jante des contraintes induites par la tension des rayons, il est connu d'équiper les jantes avec des oeillets qui traversent les orifices du pont inférieur. Ces oeillets sont assemblés par un sertissage à la périphérie de l'orifice du pont inférieur. Ils présentent par ailleurs un corps d'oeillet en forme de cuvette dont la partie inférieure repose sur le pont inférieur, et la partie supérieure présente un rebord qui s'appuie contre le pont supérieur. Le fond des oeillets est percé pour le passage du corps d'écrou. Ces oeillets sont avantageux car ils établissent des liaisons mécaniques entre les deux ponts, ce qui renforce la structure de la jante et sa résistance à la déformation.

Un oeillet monobloc est décrit dans la demande de brevet EP 130 449. Ces oeillets existent aussi en deux éléments distincts assemblés au niveau du sertissage.

Cependant, pour de telles jantes, les orifices des ponts constituent des zones de faiblesse locales qui fragilisent chacun des deux ponts. De plus, ces orifices doivent avoir des dimensions relativement importantes. Les orifices du pont inférieur doivent en effet avoir un diamètre suffisant pour permettre le passage du corps de l'écrou, et sa rotation libre. Les orifices du pont supérieur doivent permettre le passage de la tête d'écrou dont dépend l'accrochage du rayon à la jante ainsi que les outils de réglage.

Un autre problème de ces jantes est que lors du réglage de la tension des rayons, le rayon lui-même est sollicité en torsion et vrille sur lui-même avant qu'un mouvement relatif se produise au niveau des filets de liaison avec l'écrou. De ce fait, le réglage en tension des rayons est relativement imprécis, et les rayons ne travaillent pas dans les meilleures conditions.

Un autre problème de ces jantes vient de la fabrication des oeillets. En effet, si l'on souhaite équiper la jante d'oeillets doubles en forme de cuvette, la distance entre les deux ponts de la jante est directement liée à la hauteur de la cuvette de l'oeillet. L'oeillet étant réalisé de façon usuelle en acier inox par emboutissage, la hauteur maximale d'un oeillet est de ce fait limitée, ce qui impose des contraintes de dimensions pour la jante.

On connaît cependant d'après la demande de brevet publiée sous le numéro WO 93/09963 une jante présentant des orifices qui sont taraudés. L'extrémité filetée des rayons est reliée à cette jante par l'intermédiaire d'un écrou fileté à l'intérieur et taraudé à l'extérieur avec des pas différents. Cette jante présente de plus un pont supérieur non percé sauf le cas échéant pour le montage d'une valve, ce qui rend la jante étanche à l'air, et donc appropriée pour le montage d'un pneu de type tubeless.

Cependant, le pont inférieur qui est percé et taraudé doit être renforcé en épaisseur pour supporter les contraintes d'où une augmentation indésirable du poids et de l'inertie de la jante. Le mode de montage des rayons ne résout pas non plus le problème du vrillage des rayons.

Un but de l'invention est de proposer un procédé de perçage d'une jante qui permette d'obtenir une jante avec des caractéristiques mécaniques améliorées sans augmentation significative du poids.

Un autre but de l'invention est de proposer une jante percée d'orifices qui présente une résistance améliorée à la rupture.

Un autre but de l'invention est de proposer une jante dont la distance entre les deux ponts est libérée de la contrainte de hauteur limite des cuvettes d'oeillets.

Un autre but de l'invention est de proposer une roue équipée de rayons dont les conditions de travail en traction sont améliorées.

D'autres buts et avantages de l'invention apparaîtront au cours de la description qui va suivre.

Selon l'invention, le procédé de réalisation d'une jante percée d'orifices prévus pour recevoir des rayons de liaison avec un moyeu, la jante présentant un caisson avec un pont supérieur et un pont inférieur est caractérisée par le fait qu'au moins le pont inférieur est percé d'un orifice débouchant au moyen d'un forêt de perçage par refoulement opérant en direction du pont supérieur.

La jante obtenue par la mise en oeuvre du procédé est caractérisée par le fait qu'au moins l'un des ponts présente une pluralité d'orifices débouchants délimités par une cheminée de refoulement de hauteur supérieure à l'épaisseur du pont.

Le rayon prévu pour équiper la jante précédente est caractérisé par le fait qu'il présente un embout assemblé solidairement à l'extrémité du rayon, et une vis de réglage de tension montée en rotation libre en retrait par rapport à l'embout.

La roue selon l'invention présente une jante telle que précitée, un moyeu central et des rayons de liaison entre la jante et le moyeu.

Selon une autre caractéristique, la jante comprend au moins un rayon tel que précité.

L'invention sera mieux comprise en se référant à la description ci-dessous et aux dessins en annexe qui en font partie intégrante.
La figure 1 est une vue générale de côté d'une roue.
La figure 2 est une vue de face de la roue de la figure 1.
La figure 3 est une vue partielle de face et en coupe par un plan de section transversal d'une jante à l'état brut.
La figure 4 illustre l'opération de perçage de la jante selon un premier mode de mise en oeuvre de l'invention.
La figure 5 montre le résultat de l'opération de perçage.
La figure 6 illustre l'étape suivante de taraudage des orifices de la jante.
La figure 7 montre en vue de face et en coupe par un plan transversal un insert prévu pour être vissé dans les orifices.
La figure 8 est une vue de dessus et en coupe de l'insert de la figure 7.
La figure 9 montre l'insert monté dans la jante.
La figure 10 est une vue de côté d'un rayon prévu pour être assemblé à l'insert.
La figure 11 est une vue semblable à la figure 10 où les éléments situés à l'extrémité du rayon sont représentés en coupe.
La figure 12 montre le rayon assemblé à la jante.
La figure 13 est une vue semblable à la figure 12 et illustre un autre mode de mise en oeuvre de l'invention.

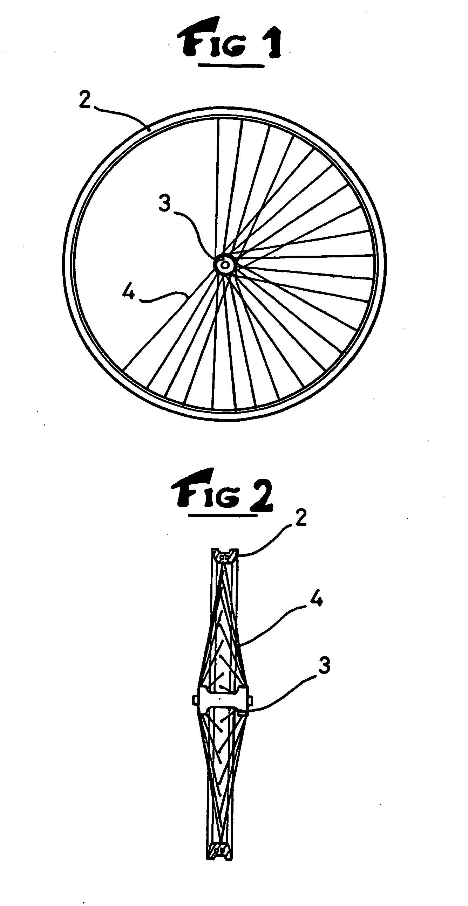

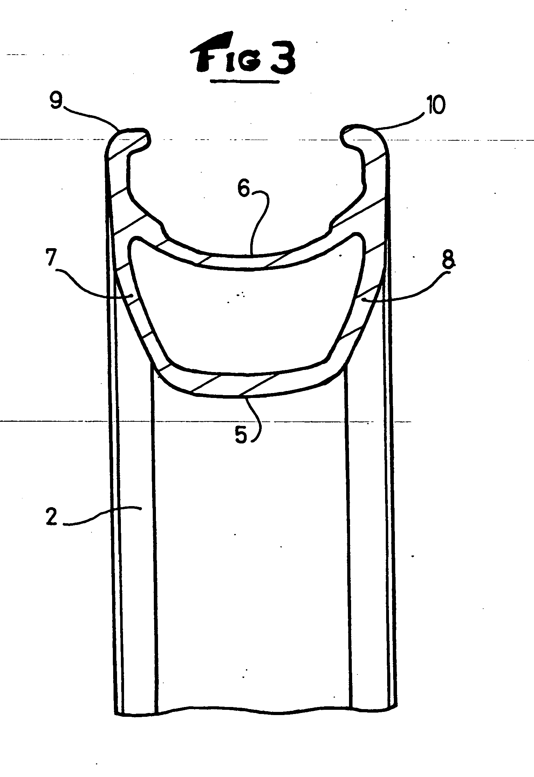

La figure 1 représente une roue de bicyclette qui comprend une jante circulaire 2 reliée à un moyeu central 3 par des rayons 4. Seule une partie des rayons est représentée dans cette figure. De façon connue, le moyeu présente des moyens appropriés pour assurer la liaison avec le cadre. Tel que cela est visible dans la figure 2, les rayons sont répartis selon deux nappes symétriques, chacune accrochée à une extrémité du moyeu 3.

La roue représentée dans les figures 1 et 2 est une roue avant. Dans le cas d'une roue arrière de façon usuelle, l'une des nappes de rayons est décalée vers la partie médiane du moyeu, pour que, de ce côté, le moyeu présente un embout comprenant le mécanisme de roue libre et servant de support au boîtier de pignons. Ceci est connu de l'homme de métier.

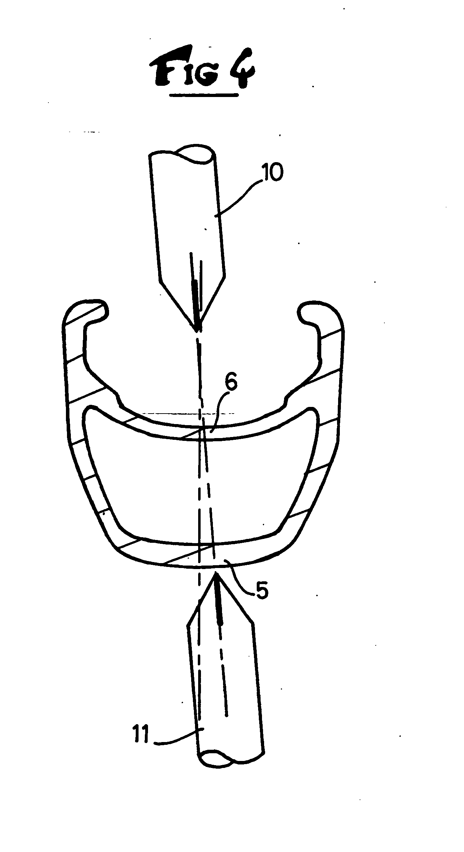

La figure 3 représente en section transversale et en vue partielle la jante 2 à l'état brut. Cette jante présente de façon connue une structure en caisson, avec un pont inférieur 5, un pont supérieur 6 reliés par des parois latérales 7 et 8. Ces parois se prolongent au-delà du pont supérieur 6 par deux ailes 9 et 10 qui forment avec le pont 6 un canal annulaire prévu pour recevoir un pneu et une chambre à air le cas échéant.

La jante représentée dans la figure n'est cependant pas limitative pour l'invention, ni en ce qui concerne le profil de la section, ni en ce qui concerne le montage d'un pneu. L'invention s'applique en effet aussi bien aux jantes prévues pour être équipées d'un pneu que des jantes prévues pour être équipées d'un boyau ou de tout autre bandage de roulement.

De façon connue, la jante telle que celle représentée en figure 3 est réalisée à partir d'un barreau profilé réalisé en alliage d'aluminium ou d'un autre alliage léger, qui est cintré, puis assemblé bout à bout au moyen d'un manchon ou par soudure. A l'état brut, les deux ponts sont des parois continues non percées.

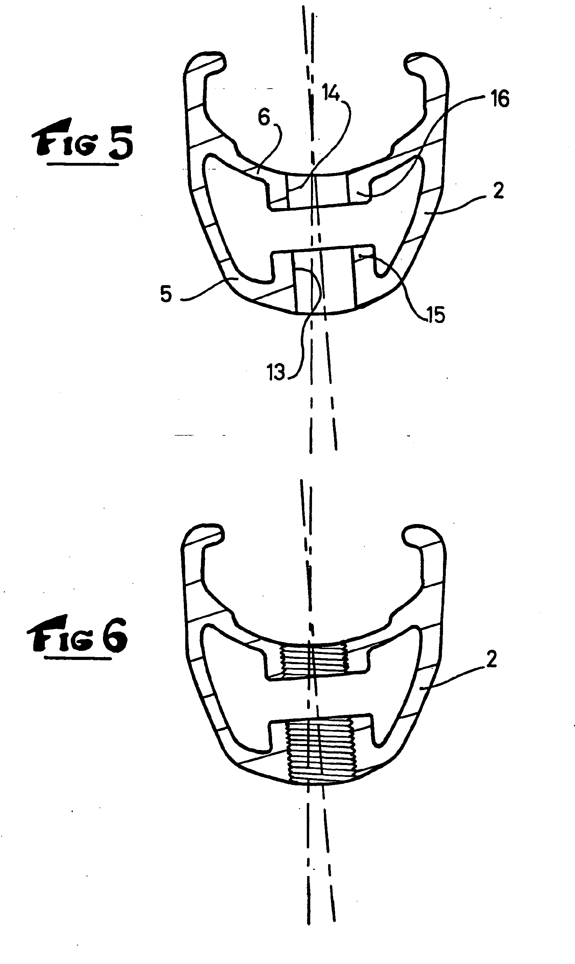

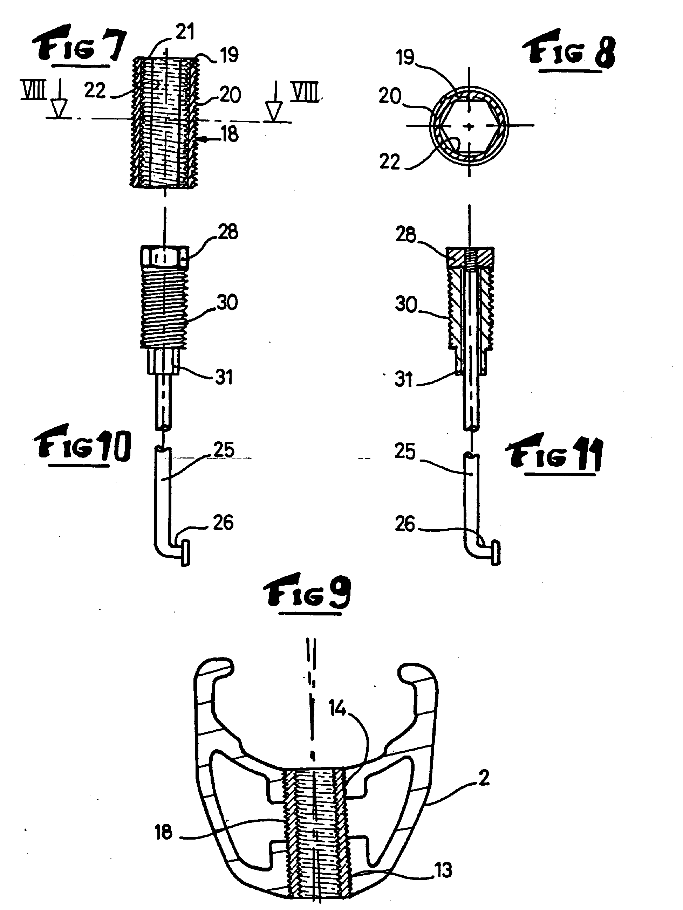

Les figures 4 et 5 illustrent l'opération de perçage de la jante. Cette opération consiste de façon connue à percer les deux ponts de la jante à intervalles réguliers, afin de permettre l'accrochage des rayons. Il faut souligner que le perçage des orifices tient compte de l'orientation propre de chaque rayon, cette orientation étant déterminée par l'orientation générale de chaque nappe, et par le nombre de rayons par nappe.

Selon l'invention, les jantes sont percées non pas à l'aide d'un forêt de coupe traditionnel, mais par un forêt qui opère par refoulement. La technique de perçage par refoulement est connue en elle-même. Les forêts utilisés pour un tel perçage ont une forme générale cylindrique, avec une pointe en forme de poinçon. La pointe est façonnée avec des arêtes, ce qui lui donne globalement la forme d'une pyramide pointue. D'autres formes d'outils peuvent également convenir.

Deux outils 10 et 11 sont utilisés dans le cas présent pour percer les deux ponts. Ils sont montés de façon coaxiale, et sont entraînés en mouvement de rotation et de translation en direction de la jante par tout moyen approprié.

La technique de perçage par refoulement présente la particularité de ne pas découper la matière, mais de la repousser dans le sens d'avancement du forêt selon une cheminée. Dans le cas présent, les cheminées sont orientées vers l'intérieur du caisson de la jante.

Le perçage par refoulement peut créer une bavure du côté opposé à la cheminée. Cette bavure est ébarbée ou mise en forme par l'outil de perçage lui-même qui présente au moins une dent d'ébarbage à cet effet. La bavure peut également être ébarbée ou mise en forme par une opération d'usinage propre.

La figure 5 représente la jante en section transversale au niveau d'un couple d'orifices, après perçage et retrait des forêts. Chaque pont 5, 6 présente un orifice débouchant 13, 14 délimité par une cheminée 15, 16 qui s'étend vers l'intérieur du caisson. Dans le mode de réalisation illustré, les deux orifices 13 et 14 présentent le même diamètre. Ce n'est pas limitatif, et comme cela sera décrit ultérieurement, ils peuvent avoir un diamètre différent.

Pour chaque cheminée, la hauteur de paroi, et son épaisseur dépendent des caractéristiques du matériau de la jante, de l'épaisseur initiale du pont, du diamètre du forêt, et des paramètres de perçage, vitesse de rotation, vitesse d'avancement, etc.

On a pu obtenir les résultats suivants.

Pour une jante réalisée en alliage d'aluminium 6106, on a percé un pont de 1,5 mm d'épaisseur avec un forêt de 5,5 mm de diamètre. La cheminée obtenue avait une longueur utile de 5 mm environ, cette longueur incluant l'épaisseur du pont.

Il faut souligner ici que le perçage des orifices par la technique de refoulement est avantageux sur le plan de la résistance mécanique de la jante. En effet, la structure de la matière ne présente plus de discontinuité brutale comme dans le cas d'un perçage traditionnel par découpe. Grâce à sa paroi périphérique, la cheminée maintient une certaine homogénéité de la structure des ponts, si bien que la résistance mécanique à la rupture de la jante ainsi percée est plus élevée que celle d'une jante percée de façon traditionnelle.

Un autre avantage est qu'un tel perçage par refoulement ne génère pas de copeau, et en particulier il n'y a pas de copeau qui pourrait s'introduire à l'intérieur du caisson.

Enfin, les deux cheminées sont orientées vers l'intérieur du caisson, il n'y a donc pas de partie saillante vers l'extérieur, en particulier du côté prévu pour le pneu et la chambre à air.

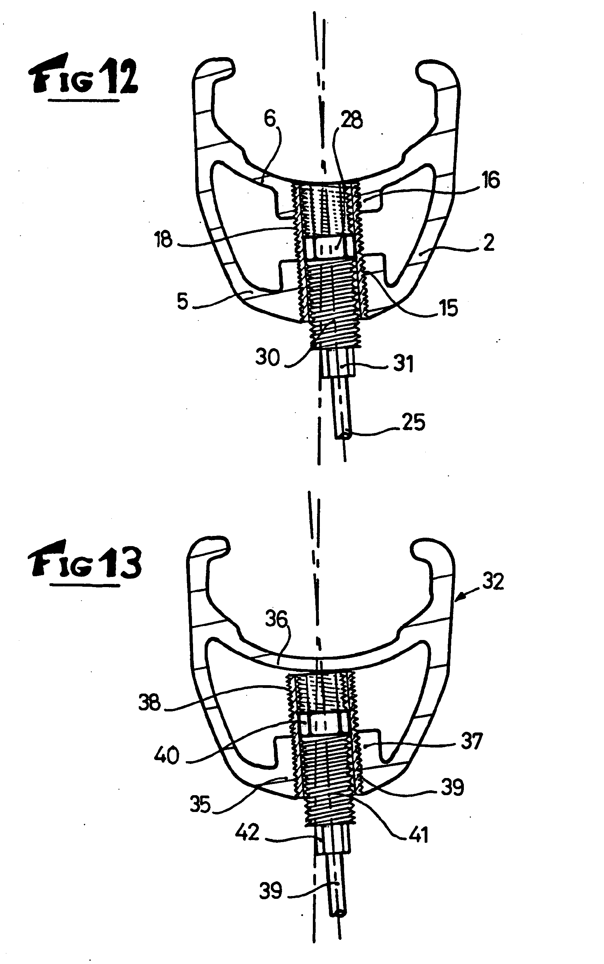

La figure 6 illustre l'étape suivante de fabrication qui consiste à tarauder les deux orifices 13 et 14 des ponts. Après taraudage, il est prévu de visser dans les deux orifices un insert monobloc, si bien que les deux taraudages sont réalisés l'un en fonction de l'autre. Si les deux trous ont même diamètre, on peut réaliser les deux opérations de taraudage avec un taraud unique en une seule passe. Si les orifices n'ont pas le même diamètre, on peut utiliser un taraud à étages, ou tout autre moyen approprié.

L'insert 18 prévu pour être vissé dans les deux orifices taraudés est représenté en figures 7 et 8. Il se présente sous la forme d'une portion de tube qui est filetée à sa paroi externe au diamètre et au pas des orifices 13 et 14. De préférence, la longueur de l'insert est égale ou légèrement inférieure à la distance entre la surface supérieure du pont supérieur 6 et la surface inférieure du pont inférieur 5, pour que une fois vissé dans les deux orifices des ponts, l'insert soit intégré totalement à l'intérieur du périmètre d'une section de la jante.

L'intérieur de l'insert est également taraudé à un pas qui est indépendant du pas externe de l'insert. De plus, l'intérieur de l'insert présente au moins dans sa partie inférieure une section polygonale, par exemple hexagonale, qui est réalisée dans l'épaisseur du filetage. En premier lieu, cette section hexagonale permet de visser l'insert dans les orifices 13 et 14 au moyen, par exemple, d'une clé hexagonale appropriée. Comme cela apparaîtra plus loin, la forme hexagonale sert également de guidage anti-rotation à un embout situé à l'extrémité du rayon. La figure 8 représente l'insert 18 vu de dessus, avec son corps 19, sur l'extérieur du corps, un filet 20 du filetage externe, et sur l'intérieur du corps, un filet 21 de taraudage sectionné par six saignées triangulaires 22 qui sont réparties aux sommets d'un hexagone, et définissent ensemble une section hexagonale.

D'autres moyens peuvent aussi convenir pour assurer l'accouplement avec un outil afin de réaliser le vissage de l'insert, par exemple une ou plusieurs rainures réalisées à la paroi interne de l'insert sur tout ou partie de sa hauteur, et prévues pour coopérer avec un outil portant un ou des ergots disposées de façon appropriée.

Egalement, l'insert pourrait présenter du côté du pont inférieur, c'est-à-dire vers l'intérieur de la jante, un prolongement en saillie, avec une section extérieure par exemple hexagonale qui permette l'accouplement d'un outil de vissage. Ceci remplace la section hexagonale à l'intérieur de l'insert. Cette section hexagonale interne est toutefois préférée, car elle permet un gain de poids sur les inserts, un gain de place également, et elle facilite la mise en place des rayons qui sera décrite plus en détails ultérieurement.

L'insert est réalisé en tout matériau approprié, par exemple en alliage d'aluminium.

L'insert est prévu pour être vissé dans les orifices 13 et 14 de la jante, et, de préférence immobilisé, par tout moyen approprié, par exemple par collage. La figure 9 illustre cette étape de réalisation de la jante équipée des inserts.

Avantageusement l'insert 18 réalise une liaison mécanique entre les deux ponts 5 et 6, qui opère dans les deux sens d'une direction longitudinale définie par l'insert. C'est-à-dire que contrairement aux oeillets qui sont sertis sur l'un des ponts et en appui simple sur l'autre, les inserts sont ici encastrés dans chacun des ponts et ils relient les ponts de façon solidaire. Le risque d'affaissement du caisson est considérablement réduit. La structure de la jante se trouve rigidifiée par de telles liaisons. Elle se trouvait déjà rigidifiée par les cheminées de refoulement. En outre, le perçage par refoulement permet d'avoir au niveau de chaque pont une hauteur de taraudage qui est bien supérieure à l'épaisseur initiale de la paroi du pont. En d'autres termes, on peut ici mettre en oeuvre une liaison par vissage sans augmenter de façon significative l'épaisseur de paroi. Par ailleurs, la longueur de l'insert n'est pas limitée par des contraintes de fabrication, si bien que la distance qui sépare les deux ponts de la jante est choisie sans contrainte relative à la longueur de l'insert. La forme du pont inférieur peut aussi être choisie par exemple plus profilée, car l'insert n'est plus serti mais vissé à l'intérieur de la jante.

Un rayon prévu pour être accroché à la jante par vissage dans l'insert est représenté en figures 10 et 11.

Le rayon 25 qui est représenté est un fil métallique avec une tête coudée 26 qui est prévue pour être accrochée à un flasque latéral d'un moyeu, par enfilage dans l'un des orifices du flasque. Ceci n'est naturellement pas limitatif, et le rayon pourrait également être à tête droite, c'est-à-dire sans coude, et être assemblé par toute autre technique que l'enfilage, par exemple par simple engagement de la tête dans un logement en forme de boutonnière ou dans une encoche. La section de la partie médiane du rayon est quelconque, notamment elle peut être cylindrique ou présenter un profil aérodynamique. Les rayons pourraient aussi être remplacés par des bâtons assemblés au moyeu ou monobloc avec celui-ci, la partie des rayons qui va maintenant être décrite constituant la partie d'extrémité de tels bâtons.

Les rayons pourraient aussi être formés à partir de fibres composites.

Cette partie d'extrémité comprend un embout 28 qui est solidarisé à l'extrémité du rayon par tout moyen approprié, par exemple par vissage et collage sur l'extrémité filetée du rayon. L'embout pourrait également être assemblé par soudure, par matage de l'extrémité du rayon, ou il pourrait être réalisé par matriçage de l'extrémité même du rayon. Selon le mode d'assemblage de la tête de rayon au moyeu, notamment par enfilage ou par engagement dans une fente, l'embout est assemblé après ou avant l'opération de mise en place du rayon sur le moyeu.

L'embout 28 présente une section de forme polygonale, par exemple hexagonale qui correspond à la section interne de l'insert. L'embout est prévu pour être engagé et coulisser à l'intérieur de l'insert 18. Le fait que l'insert présente une section interne hexagonale facilite la mise en place du rayon, avant même son serrage.

La coopération entre les sections hexagonales de l'embout de rayon et de l'insert a pour effet de retenir en rotation l'extrémité du rayon, c'est-à-dire que cela empêche tout vrillage du rayon. Comme cela a déjà été dit précédemment à propos de la section hexagonale de l'insert, tout autre moyen approprié remplissant cette fonction convient.

En arrière de l'embout, l'extrémité du rayon porte une vis de réglage de tension 30 qui est traversée par le rayon, et montée en rotation libre à son extrémité. La vis est prévue pour buter contre l'embout 28 et exercer sur lui une poussée induisant par réaction une tension dans le rayon. La vis 30 est également prévue pour être vissée à l'intérieur de l'insert 18, induisant par là une translation de l'embout 28 à l'intérieur de l'insert.

De préférence, comme cela est représenté dans les figures 10 et 11, la vis de réglage de tension se prolonge du côté opposé à l'embout par un manchon d'accouplement avec un outil de serrage, par exemple un manchon 31 de section hexagonale. Tout autre moyen approprié convient également.

La figure 12 montre schématiquement la jante dans un plan de section incluant l'insert.

Cette figure représente les différents éléments, notamment l'insert 18 engagé dans les deux orifices des ponts 5 et 6 de la jante, l'embout 28 engagé à coulissement dans l'insert, et la vis 30 de réglage de tension en partie vissée dans l'insert, avec le manchon d'accouplement 31 accessible à l'extérieur de la jante qui permet de régler la tension du rayon. Il faut souligner que lors d'un réglage de tension, le rayon ne travaille qu'à l'étirement étant donné que l'embout 28 empêche l'extrémité du rayon de pivoter. Les rayons travaillent dans de meilleures conditions et le réglage de tension est de ce fait plus précis.

La construction qui vient d'être décrite est susceptible d'être réalisée avec de nombreuses variantes. Pour la liaison entre la jante et l'insert, il serait possible, par exemple, d'utiliser un forêt qui réalise dans la même opération le taraudage de l'un au moins des orifices. On pourrait aussi utiliser des inserts auto-taraudeurs, c'est-à-dire qui créent leur propre filetage lors de leur vissage. Une autre variante consisterait à ne tarauder qu'un seul orifice, par exemple l'orifice du pont inférieur, et d'assurer la liaison avec l'autre pont par une section auto-taraudeuse de l'insert. Selon une autre variante, les deux orifices pourraient être percés par un seul forêt orienté opérant sur le pont supérieur puis sur le pont inférieur. Un tel perçage aurait pour effet d'orienter la cheminée du pont inférieur vers l'extérieur du caisson. Selon une autre variante, les deux orifices pourraient avoir des diamètres différents, l'insert ayant dans ce cas un épaulement sur lequel il peut s'appuyer pour assurer son serrage dans les orifices. On pourrait également utiliser un insert borgne du côté du pont supérieur.

A ce sujet, la figure 13 montre un autre mode de mise en oeuvre de l'invention. Selon ce mode de mise en oeuvre, seul le pont inférieur 35 de la jante 32 est percé selon la technique de refoulement, de façon à créer une cheminée 37. Le pont supérieur 36 n'est pas percé, il reste à l'état brut. Comme dans le cas précédent, un insert 38 est engagé par vissage dans la cheminée 37, et serré contre le pont supérieur. L'insert 38 se présente comme l'insert 18 précédent, avec une paroi interne taraudée et usinée selon une section hexagonale.

Le rayon 39 prévu pour coopérer avec l'insert 38 est tout à fait semblable au rayon précédent, avec à son extrémité un embout 40 de section hexagonale, une vis 41 de réglage de tension prolongée par un manchon d'accouplement avec un outil de serrage.

Une telle construction présente l'avantage que la jante est étanche, c'est-à-dire que du côté du pneu, elle présente un pont continu, non percé sauf le cas échéant pour le montage de la valve. Une telle jante est appropriée pour un montage de pneu de type tubeless, ou un montage où une partie seulement du volume défini par le pneu est occupée par une chambre à air ou un matériau de remplissage, l'autre partie étant occupée par de l'air sous pression injecté entre la jante et le pneu.

Cet autre mode de mise en oeuvre de l'invention est également susceptible de variantes de même nature que celles qui ont été précédemment décrites.

## Revendications

1. Jante de roue de bicyclette percée d'une pluralité d'orifices prévus pour recevoir des rayons de liaison en traction avec un moyeu ayant un caisson avec un pont supérieur (6, 36) situé du côté du bandage de roulement et un pont inférieur (5, 35) situé du côté du moyeu, au moins le pont inférieur (5, 35) étant percé d'un orifice débouchant (13, 39) au moyen d'un outil de perçage (11) par refoulement, ledit orifice (13, 39) étant délimité par une cheminée (15, 37) d'une hauteur supérieure à l'épaisseur du pont (5, 35), **caractérisée par le fait que** la cheminée (15, 37) est une cheminée de refoulement de forme générale cylindrique qui s'étend vers l'intérieur du caisson et que la cheminée (15, 37) a une longueur bien supérieure à l'épaisseur initiale de la paroi du pont.

2. Jante selon la revendication 1, **caractérisée par le fait que** le pont inférieur (5, 35) a une épaisseur de 1,5 millimètres, que la cheminée est orientée vers l'intérieur du caisson et a une longueur utile de 5 millimètres environ, cette longueur incluant l'épaisseur du pont.

3. Jante selon la revendication 1 ou 2, **caractérisée par le fait que** l'autre pont (6) présente une pluralité d'orifices débouchants (14) délimités par une cheminée (16) de refoulement de hauteur supérieure à l'épaisseur du pont et situés dans l'alignement des orifices (13) du pont inférieur.

4. Jante selon la revendication 1 ou 2, **caractérisée par le fait que** seul le pont inférieur (35) est percé d'un orifice débouchant en cheminée, et que le pont supérieur (36) est non percé.

5. Jante selon l'une quelconque des revendications 1 à 4, **caractérisée par le fait qu**'un insert fileté (18, 38) est introduit dans chacune des cheminées (16, 37).

6. Jante selon la revendication 5, **caractérisée par le fait que** l'insert (18) présente intérieurement une section polygonale sur au moins une partie de sa hauteur.

7. Roue comprenant un moyeu central, une jante et des rayons de liaison entre la jante et le moyeu, **caractérisée par** une jante selon l'une quelconque des revendications 1 à 6.

## Claims

1. Bicycle rim bored with a plurality of openings provided to receive tension spokes for connecting with a hub, the rim having a box with an upper bridge (6, 36) located on the side of the tread and a lower bridge (5, 35) located on the side of the rim, at least the lower bridge (5, 35) being bored with a through hole (13, 39) by means of a flow-drilling drill bit (11), said hole (13, 39) being demarcated by a chimney (15, 37) whose height is greater than the thickness of the bridge (5, 35), **characterized in that** the chimney (15, 37) is a generally cylindrically-shaped backflow chimney, which extends toward the interior of the box, and **in that** the length of the chimney (15, 37) is far greater than the initial wall thickness of the bridge.

2. Rim according to claim 1, **characterized in that** the thickness of the lower bridge (5, 35) is 1.5 millimeters, that the chimney is oriented toward the interior of the box and has a usable length of about 5 millimeters, this length comprising the thickness of the bridge.

3. Rim according to claim 1 or 2, **characterized in that** the other bridge (6) has a plurality of through holes (14) demarcated by a backflow chimney (16) whose height is greater than the thickness of the bridge and located in the alignment of the openings (13) of the lower bridge.

4. Rim according to claim 1 or 2, **characterized in that** only the lower bridge (35) is bored with a through hole of a chimney, and **in that** the upper bridge (36) is unpunched.

5. Rim according to any of claims 1 to 4, **characterized in that** a threaded insert (18, 38) is inserted in each of the chimneys (16, 37).

6. Rim according to claim 5, **characterized in that** the insert (18) has an inner polygonal section over at least one portion of its height.

7. Rim comprising a central hub, a rim, and spokes for connecting the rim to the hub, **characterized by** a rim according to any of claims 1 to 6.

## Patentansprüche

1. Radfelge eines Zweirads, welche mit einer Mehrzahl von Löchern durchbohrt ist, die zum Aufnehmen von Speichen vorgesehen sind, welche in Zugverbindung mit einer Nabe stehen, welche einen Kasten mit einer oberen Brücke (6, 36) aufweist, welche auf der Seite des Laufmantels angeordnet ist, und einer unteren Brücke (5, 35), welche auf der Seite der Nabe angeordnet ist, wobei mindestens die untere Brücke (5, 35) mit einem mündenden Loch (13, 39) mittels eines Werkzeugs zum Bohren (11) durch Stauchung durchbohrt ist, wobei das Loch (13, 39) durch einen Kamin (15, 37) von einer größeren Höhe zu der Dicke der Brücke (5, 35) begrenzt ist, **dadurch gekennzeichnet, dass** der Kamin (15, 37) ein Stauchungskamin von allgemein zylindrischer Form ist, welcher sich ins Innere des Kastens erstreckt, und dass der Kamin (15, 37) eine deutlich größere Länge gegenüber der Ausgangsdicke der Wand der Brücke aufweist.

2. Felge nach Anspruch 1, **dadurch gekennzeichnet, dass** die untere Brücke (5, 35) eine Dicke von 1,5 Millimetern aufweist, dass der Kamin in Richtung des Inneren des Kastens ausgerichtet ist und eine nützliche Länge bzw. Nutzlänge von in etwa 5 Millimetern aufweist, wobei diese Länge die Dicke der Brücke einschließt.

3. Felge nach Anspruch 1 oder 2, **dadurch gekennzeichnet, dass** die andere Brücke (6) eine Mehrzahl von mündenden Löchern (14) aufweist, welche durch einen Stauchungskamin (16) von einer größeren Höhe gegenüber der Dicke der Brücke begrenzt sind und welche in der Ausrichtung der Löcher (13) der unteren Brücke angeordnet sind.

4. Felge nach Anspruch 1 oder 2, **dadurch gekennzeichnet, dass** lediglich die untere Brücke (35) mit einem als Kamin mündenden Loch durchbohrt ist und dass die obere Brücke (36) nicht durchbohrt ist.

5. Felge nach irgendeinem der Ansprüche 1 bis 4, **dadurch gekennzeichnet, dass** ein mit Gewinde versehener Einsatz (18, 38) in jeden der Kamine (16, 37) eingeführt ist.

6. Felge nach Anspruch 5, **dadurch gekennzeichnet, dass** der Einsatz (18) innen einen polygonalen Querschnitt auf zumindest einem Teil seiner Höhe aufweist.

7. Rad, aufweisend eine zentrale Nabe, eine Felge und Verbindungsspeichen zwischen der Felge und der Nabe, **gekennzeichnet durch** eine Felge nach irgendeinem der Ansprüche 1 bis 6.
